# EUROPEAN PATENT APPLICATION

(11) **EP 4 836 513 A1**
(43) Date of publication of application: **04.11.2026**
(21) Application number: 25786962.8
(22) Date of filing: 11.04.2025
(51) Int. Cl.: H04W 28/24, H04W 28/02, H04L 41/0894, H04W 24/08, H04L 43/08, H04W 88/14, H04L 47/24

(54) **METHOD AND APPARATUS FOR MANAGING TRAFFIC ON BASIS OF DYNAMIC TRAFFIC CHARACTERISTICS IN WIRELESS COMMUNICATION SYSTEM**

(30) Priority: 12.04.2024 KR 20240049432; 02.05.2024 KR 20240058677
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); BAEK, Youngkyo, Suwon-si, Gyeonggi-do 16677 (KR); LEE, Hoyeon, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2025/004972
(87) International publication number: WO 2025/216590

(57) **Abstract**

The present disclosure relates to a 5G or 6G communication system for supporting a higher data transmission rate. In an embodiment of the present disclosure, a method performed by a policy control function (PCF) entity in a wireless communication system may comprise the steps of: receiving a request message associated with traffic characteristics in a target service flow; generating first PCC rule information regarding first traffic characteristics of the target service flow and second PCC rule information regarding second traffic characteristics thereof on the basis of the request message; and transmitting the first PCC rule information and the second PCC rule information to a session management function (SMF) entity.

## Description

### Technical Field

The present disclosure relates to a wireless communication system, and more particularly, to a method and apparatus for managing traffic, based on dynamic traffic characteristics in a wireless communication system.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), Al service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, Al-based communication technology for implementing system optimization by utilizing satellites and Al (Artificial Intelligence) from the design stage and internalizing end-to-end Al support functions, and next-generation distributed computing technology for implementing services at levels of complexity exceeding the limit of UE operation capability by utilizing ultra-high-performance communication and computing resources.

### Disclosure of Invention

### Solution to Problem

According to an embodiment of the present disclosure, a method performed by a policy control function (PCF) entity in a wireless communication system may include receiving a request message associated with a traffic characteristic in a target service flow, based on the request message, generating first policy and charging control (PCC) rule information for a first traffic characteristic in the target service flow and second PCC rule information for a second traffic characteristic in the target service flow, and transmitting the first PCC rule information and the second PCC rule information to a session management function (SMF) entity.

According to an embodiment of the present disclosure, a method performed by an SMF entity in a wireless communication system may include receiving, from a PCF entity, first PCC rule information for a first traffic characteristic in a target service flow and second PCC rule information for a second traffic characteristic in the target service flow, generating, based on the first PCC rule information and the second PCC rule information, first N4 rule information for the first traffic characteristic and second N4 rule information for the second traffic characteristic, and transmitting the first N4 rule information and the second N4 rule information to a user plane function (UPF) entity.

According to an embodiment of the present disclosure, a PCF entity in a wireless communication system may include a transceiver and at least one processor connected to the transceiver, wherein the at least one processor may be configured to receive a request message associated with a traffic characteristic in a target service flow, based on the request message, generate first PCC rule information for a first traffic characteristic in the target service flow and second PCC rule information for a second traffic characteristic in the target service flow, and transmit the first PCC rule information and the second PCC rule information to an SMF entity.

According to an embodiment of the present disclosure, an SMF entity in a wireless communication system may include a transceiver and at least one processor connected to the transceiver, wherein the at least one processor may be configured to receive, from a PCF entity, first PCC rule information for a first traffic characteristic in a target service flow and second PCC rule information for a second traffic characteristic in the target service flow, generate, based on the first PCC rule information and the second PCC rule information, first N4 rule information for the first traffic characteristic and second N4 rule information for the second traffic characteristic, and transmit the first N4 rule information and the second N4 rule information to a UPF entity.

### Brief Description of Drawings

FIG. 1 is a drawing showing an example of a network structure and an interface of a 5^{th} generation (5G) system, according to an embodiment of the present disclosure.
FIG. 2 is a diagram showing an example of transmitting, to a control plane (CP), information related to a traffic characteristic change in a flow, through a 5G system, according to an embodiment of the present disclosure.
FIG. 3A is a diagram showing an example of a method of supporting a temporary traffic change in a service flow by detecting the traffic characteristic change in the service flow and transmitting detected information to a radio access network (RAN), according to an embodiment of the present disclosure.
FIG. 3B is a diagram showing an example of a method of supporting a temporary traffic change in a service flow by detecting the traffic characteristic change in the service flow and transmitting detected information to an RAN, according to an embodiment of the present disclosure.
FIG. 4A is a diagram showing an example of a method of supporting a temporary traffic change in a service flow by detecting the traffic characteristic change in the service flow and transmitting detected information to an RAN, according to an embodiment of the present disclosure.
FIG. 4B is a diagram showing an example of a method of supporting a temporary traffic change in a service flow by detecting the traffic characteristic change in the service flow and transmitting detected information to an RAN, according to an embodiment of the present disclosure.
FIG. 5A is a diagram showing an example of a method of supporting a temporary traffic change in a service flow by detecting the traffic characteristic change in the service flow and transmitting detected information to an RAN, according to an embodiment of the present disclosure.
FIG. 5B is a diagram showing an example of a method of supporting a temporary traffic change in a service flow by detecting the traffic characteristic change in the service flow and transmitting detected information to an RAN, according to an embodiment of the present disclosure.
FIG. 5C is a diagram showing an example of a method of supporting a temporary traffic change in a service flow by detecting the traffic characteristic change in the service flow and transmitting detected information to an RAN, according to an embodiment of the present disclosure.
FIG. 6 is a block diagram showing an example of a structure of a terminal, according to an embodiment of the present disclosure.
FIG. 7 is a diagram showing an example of a structure of a base station or a network entity (NE), according to an embodiment of the present disclosure.
FIG. 8 is a diagram showing an example of a method performed by an NE, according to an embodiment of the present disclosure.
FIG. 9 is a diagram showing an example of a method performed by an NE, according to an embodiment of the present disclosure.

### Mode for the Invention

3GPP, which is responsible for cellular mobile communication standards, is proceeding with standardization by naming a new core network structure as 5^{th} generation (5G) core (5GC) to facilitate the evolution from 4^{th} generation (4G) long-term evolution (LTE) systems to 5G systems. The 5GC can support the following differentiated features compared to an evolved packet core (EPC), which is a network core for 4G.

In the 5GC, a network slice function is introduced. As a requirement for the 5G, the 5GC has to support various types of terminal types and services. For example, the 5GC has to support enhanced mobile broadband (eMBB), ultra reliable low latency communications (URLLC), and massive machine type communications (mMTC). Each of these terminals/services may have different requirements for the core network. For example, the eMBB services require a high data rate, while the URLLC services may require high stability and low latency. Network slice technology has been proposed to satisfy these various service requirements.

Network slicing may refer to a method of creating multiple logical networks (e.g., network slices) by virtualizing a single physical network. An active network slice may be referred to as a network slice instance (NSI), and each network slice instance may have different characteristics. Mobile operators may satisfy various service requirements for terminals/services by configuring network functions (NFs) suitable for the characteristics of each NSI. For example, the mobile operators may efficiently support various 5G services (e.g., eMBB, URLLC, or mMTC) by allocating an NSI that matches the characteristics of the service required by each terminal.

The 5GC may facilitate support for network virtualization paradigms by separating mobility management functions and session management functions. In the 4G LTE, all terminals may receive services from the network through signaling exchange with a single core entity called a mobility management entity (MME), which is responsible for registration, authentication, mobility management, and session management functions. In the 5G, as the number of terminals (e.g., including machine type communication (MTC) terminals) increases explosively and the mobility and traffic/session characteristics that have to be supported are subdivided according to the types of the terminals, when all functions are supported by a single entity (e.g., the MME), the scalability of adding entities for each required function is bound to decrease. Therefore, to improve scalability in terms of the functional/implementation complexity and signaling load of a core entity responsible for a control plane, various functions are being developed based on a structure that separates the mobility management functions and the session management functions.

Hereinafter, embodiments of the present disclosure are described in detail with reference to the accompanying drawings. Also, for describing the present disclosure, when it is determined that detailed descriptions for the related well known functions or configurations may blur the points of the present disclosure, the detailed descriptions are omitted. Also, the terms used below are defined in consideration of functions in the present disclosure and may be changed according to intents of users or operators, practices, or the like. Therefore, the terms shall be defined based on the aspects throughout the present specification.

For the same reason, some of elements may be exaggerated, omitted, or schematically illustrated in the attached drawings. Also, the size of each element does not entirely reflect the actual size. The same or corresponding elements in the drawings may be assigned the same reference numerals.

The advantages, features, and corresponding achieving methods of the technical concept according to the present disclosure will become apparent by referring to the embodiments described in detail below with reference to the accompanying drawings. However, the present disclosure may be realized in various different forms, rather than being limited to the embodiments described hereinafter. The present embodiments are merely provided to thoroughly describe the present disclosure and fully convey the scope of the disclosure to one of ordinary skill in the art, and the present disclosure is only defined by the scope of the claims. Throughout the specification, the same reference numerals may refer to the same elements.

Hereinafter, a base station is an entity performing resource allocation of a terminal, and may be at least one of an eNode B, a Node B, a base station (BS), a radio access network (RAN), an access network (AN), a RAN node, a wireless access unit, a base station controller, or a node on a network. A terminal may include a user equipment (UE), a mobile station (MS), a cellular phone, a smartphone, a computer, or a multimedia system capable of performing communication functions. In the present disclosure, a downlink (DL) denotes a wireless transmission path of a signal transmitted by the base station to the terminal, and an uplink (UL) denotes a wireless transmission path of a signal transmitted by the terminal to the base station.

Also, hereinafter, one or more embodiments of the present disclosure may be described using an example of the LTE, LTE-advanced (LTE-A), or 5G systems. However, one or more embodiments of the present disclosure may be implemented in other communication systems having similar technical backgrounds or channel types. For example, 5G mobile communication technology (new radio (NR)) developed after LTE-A, may be included in a system, which may use the embodiments of the present disclosure, and the 5G below may refer to a concept including the existing LTE, LTE-A, and similar other services. Also, the embodiments of the present disclosure are applicable to other communication systems through partial modification within a range not greatly deviating from the range of the present disclosure at the discretion of one of ordinary skill in the art.

It will be understood that each block of flowchart illustrations and combinations of blocks in the flowchart illustrations may be implemented by computer program instructions. Because these computer program instructions may be loaded into a processor of a general-purpose computer, special purpose computer, or other programmable data processing device, the instructions, which are executed via the processor of the computer or other programmable data processing device generate means for implementing functions specified in the flowchart block(s). Because these computer program instructions may also be stored in a computer usable or computer-readable memory that may direct a computer or other programmable data processing device to function in a particular manner, the instructions stored in the computer usable or computer-readable memory may produce an article of manufacture including instruction means that implement the functions specified in the flowchart block(s). Because the computer program instructions may also be loaded onto a computer or other programmable data processing device, a series of operational steps may be performed on the computer or other programmable device to produce a computer implemented process, and thus the instructions executed on the computer or other programmable device may provide steps for implementing the functions specified in the flowchart block(s).

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks illustrated in succession may in fact be executed substantially concurrently, or the blocks may sometimes be executed in a reverse order.

The term "~ unit" used in an embodiment of the present disclosure may refer to a software or hardware component, such as a field-programmable gate array (FPGA) or an application-specific integrated circuit (ASIC), which may perform certain tasks. However, the term "~ unit" is not limited to software or hardware. The term "~ unit" may be constructed to be stored in an addressable storage medium or to execute one or more processors. Thus, for example, the term "~ unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. The functionality provided in components and "~ units" may be combined into fewer components and "~ units" or may be further separated into additional components and "~ units". Moreover, the components and "~ units" may be implemented to reproduce one or more central processing units (CPUs) within a device or a security multimedia card. Also, according to an embodiment, a "~ unit" may include one or more processors.

In the case of metaverse and extended reality (XR) applications, terminals have to transmit and receive a large amount of traffic, and thus, to effectively process traffic, important technical problems have to be solved, unlike in existing applications. Unlike existing research, which has primarily focused on effectively transmitting application server traffic to terminals, the new challenge facing metaverse/XR traffic is to effectively handle the large volume of traffic and service flows with various characteristics.

For metaverse and XR applications, a large amount of data has to be transmitted, and methods to reduce network congestion may be applied to effectively schedule this. To this end, extended reality and media service (XRM) introduced a method for data forwarding and processing in the form of protocol data units (PDU) by considering the characteristics within the flow for efficient scheduling, moving away from the existing concept of data forwarding in the form of simple 5-tuple-based flow units in a user plane function (UPF). At an application layer, the data forwarding and processing in the form of PDU units with similar characteristics may be divided into logical units called PDU sets.

According to an embodiment of the present disclosure, when the characteristics of data traffic within a service flow transmitted from an application server or a terminal change according to network conditions and requests, information regarding the change in characteristics may be provided on a control plane or included in real-time transport protocol (RTP) header extension (HE) information, etc. Thus, a time point when the data characteristics change during real-time data transmission of the service flow and related information may be provided, and a method for accurate processing when processing data in PDU units in the UPF may be proposed.

According to an embodiment of the present disclosure, when traffic characteristics (data rate, codec type, etc.) within a service flow change due to congestion in a network or the like, information in the control plane for recognizing the information about the time point of the change, etc. in the UPF, or in-band signaling may be used to notify the UPF that the characteristics within the service flow have changed. Through this, when the UPF processes data in PDU units (PDU set) considering the characteristics of the application layer, the UPF may provide information for processing bundles of PDU units with the same characteristics, enabling the provision of efficient services even when traffic characteristics change depending on network conditions. In addition, when separate in-band signaling is not provided due to operator policies, etc., an application function (AF) may notify a policy control function (PCF) of changes in traffic characteristics and related information, thereby providing the UPF with packet detection rules that take traffic changes into account.

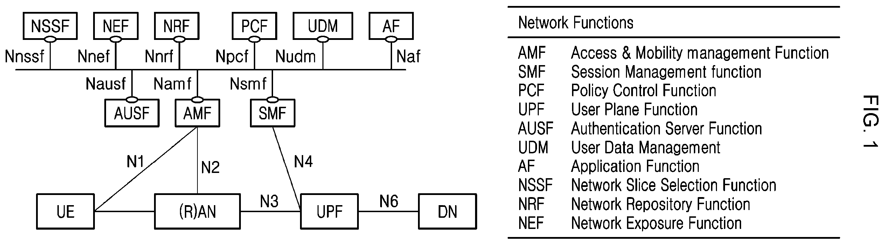

FIG. 1 is a drawing showing an example of a network structure and an interface of a 5G system, according to an embodiment of the present disclosure.

A network entity included in the network structure of the 5G system of FIG. 1 may include an NF according to a realized system.

Referring to FIG. 1, the network structure of the 5G system may include various network entities. For example, the 5G system may include an authentication server function (AUSF), a (core) access and mobility management function (AMF), a session management function (SMF), a PCF, an AF, unified data management (UDM), a data network (DN), a network exposure function (NEF), an edge application service domain repository (EDR), an edge application server (EAS), an EAS discovery function (EASDF), a UPF, a (radio) access network ((R)AN), and a terminal, that is, a UE.

Each NF in the 5G system may support the following function.

The AUSF may process and store data for authentication of the UE.

The AMF may provide an access and mobility management function in UE units, and one UE may be basically connected to one AMF. In detail, the AMF may support signaling between core network (CN) nodes for mobility between 3GPP access networks, termination of a RAN control plane (CP) interface (that is, an N2 interface), termination N1 of non-access stratum (NAS) signaling, NAS signaling security (NAS ciphering and integrity protection), access stratum (AS) security control, registration management (registration area management), connection management, idle mode UE reachability (including control and execution of paging retransmission), mobility management control (subscription and policy), intra-system mobility and inter-system mobility support, network slicing support, and SMF selection. Also, the AMF may support functions, such as lawful intercept (LI) (for an AMF event and an interface into an LI system), provision of transmission of a session management (SM) message between the UE and the SMF, a transparent proxy for routing an SM message, access authentication, access authorization including a roaming authority check, provision of transmission of an SMS message between the UE and the SMSF, a security anchor function (SAF), and/or security context management (SCM). Some or all functions of the AMF may be supported within a single instance of one AMF.

The DN may denote, for example, an operator service, internet access, or a 3^{rd} party service. The DN may transmit a DL PDU to the UPF or receive, from the UPF, the PDU transmitted from the UE.

The PCF may receive information about a packet flow from an application server and provide a function of determining policies, such as mobility management, session management, etc. In detail, the PCF may provide functions, such as support of a unified policy framework for controlling a network operation, provision of a policy rule for (a) CP function(s) (e.g., the AMF, the SMF, etc.) to execute the policy rule, realization of a front end for accessing related subscription information for policy determination in a user data repository (UDR), etc.

The SMF may provide a session management function, and when the UE has a plurality of sessions, each session may be managed by the different SMF. In detail, the SMF may support session management (e.g., session establishment, modification, and release including tunnel maintenance between the UPF and an (R)AN node), UE internet protocol (IP) address allocation and management (selectively including authentication), selection and control of a UP function, traffic steering setting for routing traffic to an appropriate destination in the UPF, interface termination for the PCFs, partial control execution of a policy and a quality of service (QoS), and LI (for an SM event and an interface to an LI system). Also, the SMF may support functions, such as termination of an SM part of an NAS message, DL data notification, initiator of AN-specific SM information (transmission to the (R)AN through N2 through the AMF), determination of an SSC mode of a session, a roaming function, etc. Some or all functions of the SMF may be supported within a single instance of one SMF.

The UDM may store user subscription data, policy data, etc. The UDM may include two portions, which are an application front end (FE) and a UDR.

The FE may include a UDM-FE responsible for location management, subscription management, credential processing and a PCF responsible for policy control. The UDR may store data required for functions provided by the UDM-FE and a policy profile required by the PCF. The data stored in the UDR may include user subscription data including subscription identification, security credential, access and mobility-related subscription data, and session-related subscription data, and the policy data. The UDM-FE may access the subscription information stored in the UDR and may support functions, such as authentication credential processing, user identification handling, access authentication, registration/mobility management, subscription management, SMS management, etc.

The UPF may transmit the DL PDU received from the DN to the UE through the (R)AN, and may transmit the UL PDU received from the UE to the DN through the (R)AN. In detail, the UPF may support an anchor point for intra/inter RAT mobility, an external PDU session point of an interconnect to a DN, packet routing and forwarding, a user plane portion of packet inspection and policy rule execution, LI, reporting of a traffic use amount, and an UL classifier for supporting routing of the traffic flow to the DN. Also, the UPF may support functions, such as a branching point for supporting a multi-homed PDU session, QoS handling for a user plane (e.g., packet filtering, gating, and UL/DL rate execution), UL traffic verification (service data flow (SDF) mapping between an SDF and a QoS flow), transport level packet marking within the UL and the DL, DL packet buffering, DL data notification triggering, etc. Some or all functions of the UPF may be supported within a single instance of one UPF.

The AF may interwork with a 3GPP core network for service provision (e.g., supporting functions, such as an application influence on traffic routing, access to network capability exposure, interworking with a policy framework for policy control, etc.).

The (R)AN may collectively refer to a new RAN supporting both of evolved E-UTRA which is an evolved version of a 4G radio access technique and a new radio (NR) access technique (e.g., gNB).

The gNB may support functions for radio resource management (e.g., radio bearer control, radio admission control, connection mobility control, dynamic allocation of resources (i.e., scheduling) to the UE in the UL/DL), IP header compression, encryption and integrity protection of user data streams, selection of the AMF at UE attachment when routing to the AMF from the information provided to the UE is not determined, routing of user plane data to the UPF(s), routing of CP information to the AMF, and connection setup and termination. In addition, the gNB may support functions, such as scheduling and transmission of paging messages (generated from the AMF), scheduling and transmission of system broadcast information (generated from the AMF or operating and maintenance (O&M)), measurement and measurement reporting settings for mobility and scheduling, transport level packet marking in the UL, session management, support for network slicing, QoS flow management and mapping to data wireless bearers, support for UEs in an inactive mode, distribution of NAS messages, NAS node selection, wireless access network sharing, dual connectivity, tight interworking between the NR and the E-UTRA, etc.

The UE may refer to a user device. The user device may be referred to by terms, such as "terminal," "mobile equipment (ME)," and "mobile station (MS)." In addition, the user device may be a portable device such as a laptop, a cellular phone, a personal digital assistant (PDA), a smartphone, a multimedia device, etc., or a non-portable device such as a personal computer (PC) or a vehicle-mounted device.

The NEF may provide a means to securely expose services and capabilities for, for example, third parties, internal exposure/re-exposure, application functions, and edge computing, which are provided by 3GPP network functions. The NEF may receive information (based on the exposed capability (capabilities) of other NF(s)) from the other NF(s). The NEF may store the received information as structured data by using a standardized interface as the data storage network function. The stored information may be re-exposed to other NF(s) and AF(s) by the NEF and may be used for other purposes such as analysis.

The EASDF may be an NF that may add an address of a domain name system (DNS) server to forward a DNS request of a terminal, and an extension mechanisms for DNS (EDNS) client subnet (ECS) option, which may be expressed as an IP subnet address to be added when forwarding the DNS request of the terminal, for each fully qualified domain name (FQDN). The EASDF may receive EAS domain setting information from the EDR, and may perform processing on the DNS request message received from the terminal, according to the received information.

Also, the EASDF may be an NF that performs functions of: receiving, from the SMF, a terminal IP address and location information of the terminal in 3GPP, and a DNS message processing rule and a DNS message report rule; processing a DNS query message received from the terminal and a DNS response message received from the DNS server; and transmitting, to the SMF, according to the DNS message report rule, information in the DNS message and statistical information obtained by processing the DNS message.

All of the NFs illustrated in FIG. 1 may perform interworking with the NRF according to necessity.

The NRF may support a service discovery function. The NRF may receive an NF discovery request from an NF instance and provide information of the discovered NF instance to the NF instance. Also, the NRF may maintain available NF instances and services supported thereby.

Also, while FIG. 1 illustrates, for convenience of explanation, a reference model with respect to a case in which the UE accesses one DN by using one PDU session, the present disclosure is not limited thereto.

The UE may simultaneously access two (that is, local and central) data networks by using multiple PDU sessions. Here, 2 SMFs may be selected for the different PDU sessions. However, each SMF may have the capability for controlling both a local UPF and a central UPF in the PDU session.

Also, the UE may simultaneously access two (that is, local and central) data networks provided in a single PDU session.

In the 3GPP system, a conceptual link connecting the NFs in the 5G system may be defined as a reference point. For example, the reference point(s) included in the 5G system of FIG. 1 is (are) as follows.
- N1: reference point between UE and AMF
- N2: reference point between (R)AN and AMF
- N3: reference point between (R)AN and UPF
- N4: reference point between SMF and UPF
- N5: reference point between PCF and AF
- N6: reference point between UPF and DN
- N7: reference point between SMF and PCF
- N8: reference point between UDM and AMF
- N9: reference point between 2 core UPFs
- N10: reference point between UDM and SMF
- N11: reference point between AMF and SMF
- N12: reference point between AMF and AUSF
- N13: reference point between UDM and AUSF
- N14: reference point between 2 AMFs
- N15: in the case of a non-roaming scenario, reference point between PCF and AMF, and in the case of roaming scenario, reference point between PCF and AMF in visited network
- Nx: reference point between SMF and EASDF
- Ny: reference point between NEF (EDF) and EASDF

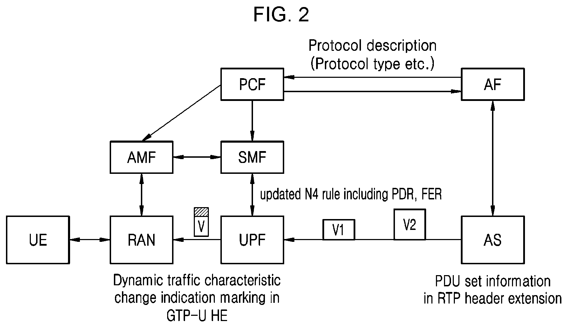

FIG. 2 is a diagram showing an example of transmitting, to a CP, information related to a traffic characteristic change in a flow, through a 5G system, according to an embodiment of the present disclosure. FIG. 2 is a diagram showing an example of transmitting, to the CP, information about requirements for detecting the traffic characteristic change in the flow and information about traffic characteristics in the flow, through the 5G system, according to an embodiment of the present disclosure.

In the existing 5G system, a QoS flow in a PDU session may be a method of representing a QoS difference in a smallest unit. The 5G QoS characteristic may be determined by a 5QI (QoS identifier). It may be temporarily necessary to transmit, to the CP, through the 5G system, a large amount of traffic in the flow, according to a temporary requirement of the terminal. For example, when a time point or a time movement of a user is selected according to selection of a service user during the use of a network rendering-based virtual reality (VR) service or video on demand (VoD) service, it may be required to transmit a new image or video to the terminal according to a service requirement, etc. within a recognition time point of the user to play the video at the corresponding time point. In order to support the temporary traffic characteristic change as described above, a QoS profile (e.g., a dynamic QoS profile) taking into account the traffic characteristic to be temporarily changed may be additionally generated, in addition to a profile of an existing QoS flow (e.g., a base QoS profile), and changing of characteristics (e.g., a maximum data burst volume (MDBV)) of the QoS flow in service for only a predetermined time period may be performed.

The AF may transmit, to the PCF, the information about traffic characteristics (the base traffic characteristic and the traffic characteristic to be changed) in the flow, the information including MDBV information supporting the change in traffic characteristics according to the service requirement and/or information of at least one of a content type, resolution, data rate, frame rate, and data burst size.

The PCF may generate information for supporting a service supporting the temporary traffic characteristic change, based on traffic characteristic change detection information (e.g., dynamic traffic characteristic detection information), traffic characteristic information (e.g., dynamic traffic characteristic requirement), and service support indication supporting the temporary traffic characteristic change (e.g., dynamic traffic characteristic change support indication) that are received from the AF. The PCF may generate a policy and charging control (PCC) rule including the traffic characteristic change detection information, the base QoS profile, the dynamic QoS profile, the data burst size, and the dynamic traffic characteristic change support indication and transmit the generated PCC rule to the SMF.

The SMF may transmit the information for supporting the service supporting the temporary traffic characteristic change to the UPF and the RAN, based on the PCC rule information received from the PCF. The SMF may generate an N4 rule for requesting generation of information for the UPF to transmit the traffic characteristic change detection and traffic characteristic change information in the service data flow to the RAN based on the dynamic traffic characteristic change support indication information and the traffic characteristic change detection information (e.g., the dynamic traffic characteristic detection information). Also, the SMF may transmit the base QoS profile, the dynamic QoS profile, the data burst size, etc. to the RAN.

The RAN that receives the information of the corresponding base QoS profile, the dynamic QoS profile, the data burst size, etc. from the SMF may process the corresponding QoS flow, based on the base QoS profile, until additional indication or traffic change notification information is transmitted. When the traffic change notification information is transmitted through the UPF or the SMF, the RAN may process traffic in a corresponding QoS flow, based on the information of the dynamic QoS profile, the data burst size, etc. received from the SMF.

After the UPF receives, from the SMF, the N4 rule including the requirement for the generation of the traffic characteristic change detection and traffic characteristic change notification information in the service data flow, the UPF may perform an operation of monitoring the traffic transmitted in the corresponding service data flow. The data traffic monitoring operation may be performed based on the traffic characteristic change detection information (e.g., dynamic traffic characteristic detection information) transmitted from the AF. For example, when an application server (AS) notifies that a characteristic of a predetermined packet is explicitly changed, through a dynamic traffic characteristic change flag, etc. transmitted through an RTP HE field, etc., the AF may transmit information that the corresponding traffic characteristic change may be detected through information in a predetermined header or header information in a protocol. Alternatively, when the AS, etc. are not able to transmit explicit packet characteristic change information through a predetermined header or a header field in a protocol, the AF may transmit related information for measuring an implicit packet characteristic change.

For example, when a pattern between packets or of the packets change, based on measuring an average data rate between the packets, or monitoring a distance (based on a frame rate) between the packets or a packet transmission pattern (based on group of pictures (GOP) information), the UPF may recognize the change of the characteristic of the traffic received from the AS through the service data flow. The UPF that recognizes the change of the corresponding traffic characteristic may generate the traffic characteristic change notification information for requesting the QoS profile information taking into account the changed traffic characteristic information to be applied to the corresponding QoS flow.

The traffic characteristic change notification information generated by the UPF may be directly transmitted to the RAN in a user plane or may be transmitted to the RAN through the SMF in a CP. For example, the UPF may directly transmit, to the RAN, the traffic characteristic change notification information in the form of dynamic traffic characteristic change indication (DCI) or a dynamic traffic characteristic change flag, in the user plane by marking the traffic characteristic change notification information in a general packet radio service (GPRS) tunneling protocol-user plane (GTP-U) extension header. Alternatively, the UPF may transmit the DCI to the SMF through an event reporting message created by the UPF, and the SMF may transmit the corresponding traffic characteristic change notification information to the RAN through the AMF.

Thereafter, when traffic change event-related notification information detected through the UPF is transmitted through the UPF or the SMF, the RAN may process the traffic in the corresponding QoS flow, based on the information, such as the dynamic QoS profile, the data burst size, etc. received from the SMF. When there is a requirement for supporting a temporary traffic characteristic change also in the UL data, the SMF may provide the base QoS profile, the dynamic QoS profile, the data burst size, etc. to the UE through an N1 SM container. When the AS requests a traffic characteristic change with respect to the UL data, the SMF or the UPF may transmit the traffic characteristic change notification information detected by the UPF to the UE through the RAN, so that the temporary traffic characteristic change transmitted by the UE may be supported.

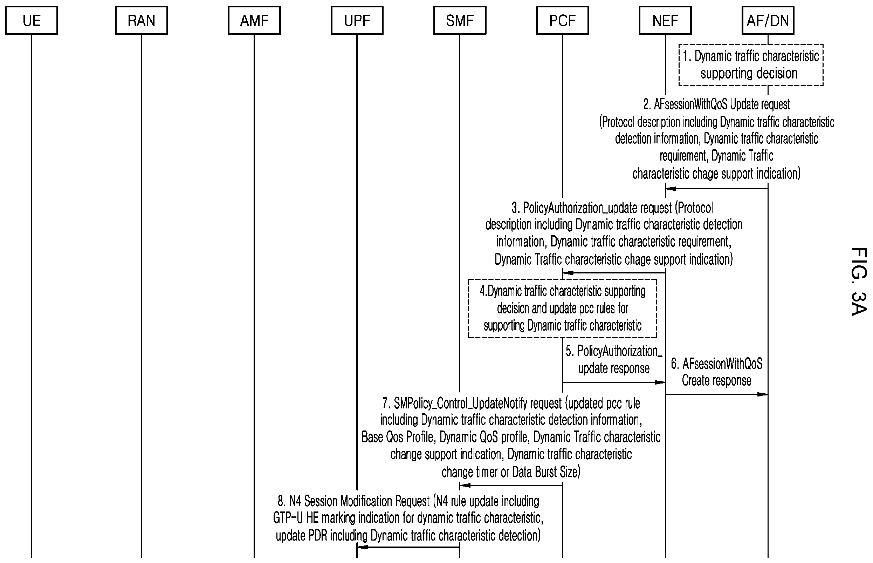

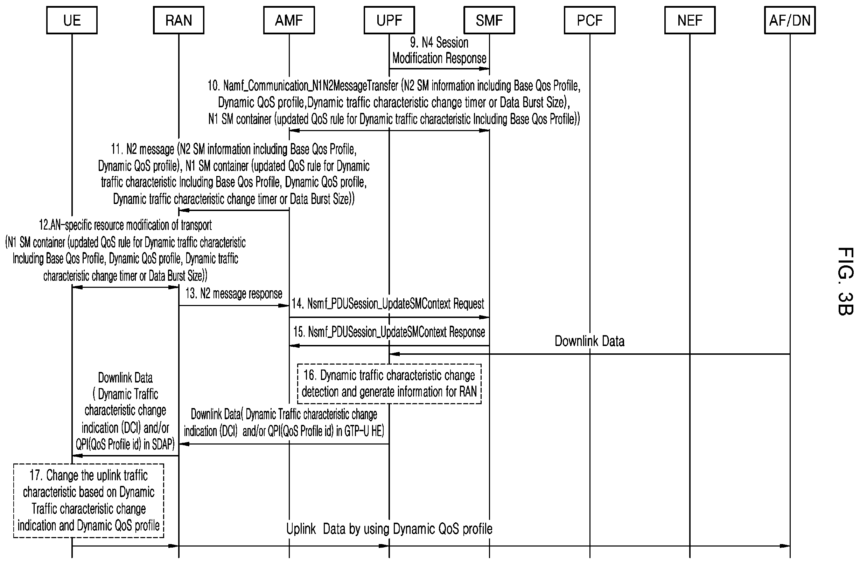

FIG. 3A is a diagram showing an example of a method of supporting a temporary traffic change in a service flow by detecting the traffic characteristic change in the service flow and transmitting detected information to the RAN, according to an embodiment of the present disclosure. FIG. 3B is a diagram showing an example of a method of supporting a temporary traffic change in a service flow by detecting the traffic characteristic change in the service flow and transmitting detected information to the RAN, according to an embodiment of the present disclosure. For example, FIG. 3B may illustrate one or more operations subsequent to FIG. 3A.

In operation 1, the AF may determine a service request taking into account the traffic characteristic change in the service flow currently in service, according to determination by the AS or the AF.

In operation 2, the AF may transmit, to the NEF, an AF session service operation create/update request (AFsessionWithQoS create/update request) message including a QoS requirement including indication requesting dynamic traffic characteristic change service support (dynamic traffic characteristic change support indication), traffic characteristic change detection information (dynamic traffic characteristic detection information), and traffic characteristic information (dynamic traffic characteristic requirement). The traffic characteristic information (the dynamic traffic characteristic requirement) transmitted from the AF may include information about traffic characteristics (a base traffic characteristic and a traffic characteristic to be changed) in the flow, the information including MDBV information and/or information of at least one of a type, resolution, data rate, frame rate, and data burst size of content. The traffic characteristic change detection information (the dynamic traffic characteristic detection information) transmitted from the AF may include at least one of: transmission and location information of the traffic characteristic change information in a packet, such as DCI, a dynamic traffic characteristic change flag, start time of data burst, end of data burst, etc., explicitly transmitted through an RTP HE field, etc.; or information implicitly transmitted for measuring a packet characteristic change (e.g., information for comparing a traffic change between packets, based on an average data rate between the packets or a threshold value of a data rate of the base QoS profile (e.g., threshold for base QoS profile), a distance (based on a frame rate) between the packets, a packet transmission pattern (based on GOP information), and periodicity information).

In operation 3, service QoS requirement information including the indication requesting the dynamic traffic characteristic change service support (the dynamic traffic characteristic change support indication), the traffic characteristic change detection information (the dynamic traffic characteristic detection information), and the traffic characteristic information (the dynamic traffic characteristic requirement) may be authorized by the NEF, and thereafter, may be transmitted to the PCF through a policy authorization service create/update request (PolicyAuthorization create/update request).

In operation 4, when the PCF determines the dynamic traffic characteristic change service support, based on the indication requesting the dynamic traffic characteristic change service support (the dynamic traffic characteristic change support indication), the traffic characteristic change detection information (the dynamic traffic characteristic detection information), and the traffic characteristic information (the dynamic traffic characteristic requirement) received from the AF, the PCF may perform a PCC rule update for supporting the corresponding service. A QoS profile (e.g., a dynamic QoS profile) taking into account a traffic characteristic to be temporarily changed, in addition to a profile of an existing QoS flow (e.g., a base QoS profile), may be additionally generated in the updated PCC rule in order to support the temporary traffic characteristic change, and the RAN may perform changing of characteristics (e.g., the MDBV) of the QoS flow in service for only a predetermined time period by using the corresponding dynamic QoS profile. Also, the PCC rule may include information for supporting an operation of traffic characteristic change detection in a data flow, an operation of generation of traffic characteristic change notification information, etc. performed by the UPF.

In operation 5 and operation 6, the PCF may transmit, to the AF, whether to accept or reject the request for the dynamic traffic characteristic change service support, put by the AF, through a PolicyAuthorization_create/update response message and an AFsessionWithQoS create/update response message. For example, the PCF may transmit the PolicyAuthorization_create/update response message to the NEF, and the NEF may transmit the AFsessionWithQoS create/update response message to the AF.

In operation 7, the PCF may determine policy update, based on the dynamic traffic characteristic change service information received from the AF in operation 4, and may transmit a PCC rule updated based on the determined policy update to the SMF. The updated PCC rule may include information of at least one of: QoS flow-related information to be transmitted to the RAN and/or the UE, such as the dynamic traffic characteristic detection information, the base QoS profile, the dynamic QoS profile, the data burst size, etc., for supporting the operation of the traffic characteristic change detection in the data flow; the dynamic traffic characteristic change support indication indicating the dynamic traffic characteristic change service support and transmission of service-related information; and information (dynamic traffic characteristic change timer) about how long the changed traffic characteristic change information (the dynamic QoS profile) is to be applied.

The SMF may determine to transmit, to the UPF and the RAN, information for supporting a service supporting the temporary traffic characteristic change based on the PCC rule information received from the PCF. The SMF may perform an operation of generating an N4 rule for requesting an operation of generating information for the UPF to transmit the traffic characteristic change detection and traffic characteristic change information in the service data flow to the RAN based on the dynamic traffic characteristic change support indication information and the traffic characteristic change detection information (the dynamic traffic characteristic detection information). Also, the SMF may determine to transmit the base QoS profile, the dynamic QoS profile, the data burst size, etc. to the RAN.

In operations 8 and 9, the SMF may transmit, to the UPF, an SDF template including information, etc. about the operation of generating the information for transmitting, to the RAN, the traffic characteristic change detection and traffic characteristic change information in the service data flow through an N4 session create/modify process. After the UPF receives, from the SMF, the N4 rule including the requirement for the generation of the traffic characteristic change detection and traffic characteristic change notification information in the service data flow, the UPF may perform an operation of monitoring the traffic transmitted in the corresponding service data flow. The data traffic monitoring operation may be performed based on the traffic characteristic change detection information (dynamic traffic characteristic detection information) transmitted from the AF. For example, when the AS notifies that a characteristic of a predetermined packet is explicitly changed, through a dynamic traffic characteristic change flag, etc. transmitted through an RTP HE field, etc., information that the corresponding traffic characteristic change may be detected through information in a predetermined header or header information in a protocol may be transmitted. Alternatively, when the AS, etc. are not able to transmit explicit packet characteristic change information through a predetermined header or a header field in a protocol, related information for measuring an implicit packet characteristic change may be transmitted.

For example, when a pattern between packets or of the packets change, based on measuring an average data rate between the packets, or monitoring a distance (based on a frame rate) between the packets or a packet transmission pattern (based on GOP information), the UPF may recognize the change of the characteristic of the traffic received from the AS through the service data flow. The UPF that recognizes the change of the corresponding traffic characteristic may generate the traffic characteristic change notification information for requesting the QoS profile information taking into account the changed traffic characteristic information to be applied to the corresponding QoS flow.

The traffic characteristic change notification information generated by the UPF may be directly transmitted to the RAN in a user plane or may be transmitted to the RAN through the SMF in a CP. For example, the UPF may directly transmit, to the RAN, the traffic characteristic change notification information in the form of DCI or a dynamic traffic characteristic change flag, in the user plane by marking the traffic characteristic change notification information in a GTP-U extension header. Alternatively, the UPF may transmit the DCI to the SMF through an event reporting message created by the UPF, and the SMF may transmit the corresponding traffic characteristic change notification information to the RAN through the AMF.

In operation 10, the base QoS profile, the dynamic QoS profile, the data burst size, etc. generated or updated by the PCF based on the dynamic traffic characteristic change support service request information of the AF in operation 4, may be transmitted to the AMF. An N1N2 message transmitted to the AMF may include N2 SM information including the base QoS profile, the dynamic QoS profile, and the data burst size transmitted to the RAN and a N1 SM container including the information, such as the base QoS profile, the dynamic QoS profile, the data burst size, for supporting the dynamic traffic characteristic change support service in the UL traffic. The information, such as the base QoS profile, the dynamic QoS profile, and the data burst size, included in the N2 SM information transmitted to the RAN, and the information, such as the base QoS profile, the dynamic QoS profile, and the data burst size, in the N1 SM container transmitted to the UE, may be the same as each other or different from each other according to service operator's settings, etc.

In operation 11, the AMF may transmit, to the RAN, through an N2 message, the N2 SM information and the N1 SM container including information of at least one of the base QoS profile, the dynamic QoS profile, and the data burst size for supporting the dynamic traffic characteristic change from the SMF.

In operation 12, the RAN may transmit, to the UE, the N1 SM container including the information, such as the base QoS profile, the dynamic QoS profile, and the data burst size, for supporting the dynamic traffic characteristic change support service in the UL traffic.

In operations 13 and 14, the UE and the RAN may transmit a response message, etc. of the N2 message to the SMF. For example, the RAN may transmit the N2 message response message to the AMF, and the AMF may transmit an Nsmf_PDUSession_UpdateSMContextRequest message to the SMF.

In operation 15, the SMF may transmit an Nsmf_PDUSession_UpdateSMContextResponse message to the AMF.

In operation 16, the UPF that recognizes the change of the corresponding traffic characteristic may generate the traffic characteristic change notification information for requesting the QoS profile information (the dynamic QoS profile) taking into account the changed traffic characteristic information to be applied to the corresponding QoS flow. The traffic characteristic change notification information generated by the UPF may be directly transmitted to the RAN in a user plane or may be transmitted to the RAN through the SMF in a CP. For example, the UPF may directly transmit, to the RAN, the traffic characteristic change notification information in the form of DCI or a dynamic traffic characteristic change flag, in the user plane by marking the traffic characteristic change notification information in a GTP-U extension header. Alternatively, the UPF may transmit the DCI to the SMF through an event reporting message created by the UPF, and the SMF may transmit the corresponding traffic characteristic change notification information to the RAN through the AMF.

Thereafter, when traffic change event-related notification information detected through the UPF is transmitted through the UPF or the SMF, the RAN may process the traffic in the corresponding QoS flow, based on the information, such as the dynamic QoS profile, the data burst size, etc. received from the SMF. When there is a requirement for supporting a temporary traffic characteristic change also in the UL data, the SMF may provide the base QoS profile, the dynamic QoS profile, the data burst size, etc. to the UE through an N1 SM container. When the AS requests a traffic characteristic change with respect to the UL data, the UPF or the SMF may transmit the traffic characteristic change notification information detected by the UPF to the UE through the RAN, so that the temporary traffic characteristic change transmitted by the UE may be supported.

In operation 17, the UE may perform an UL traffic transmission operation using the dynamic QoS profile based on the traffic characteristic change notification information transmitted by the RAN through the DCI, the dynamic traffic characteristic change flag, etc. in the SDAP header. In operation 16, when the DCI or the dynamic traffic characteristic change flag is transmitted to the UE, the RAN may apply the dynamic QoS profile to the UL traffic transmitted from the corresponding UE. Also, when the burst data size, the dynamic traffic characteristic change timer, etc. are transmitted to the RAN and the UE through the SMF, the RAN and the UE may perform a processing operation of the UL traffic using the dynamic QoS profile during the corresponding time period. When additional DCI or an additional dynamic traffic characteristic change flag within the burst data size or the dynamic traffic characteristic change timer is transmitted, the time of the burst data size or the dynamic traffic characteristic change timer may be extended, and the RAN and the UE may perform the processing operation of the UL traffic using the dynamic QoS profile by further taking into account the extended time.

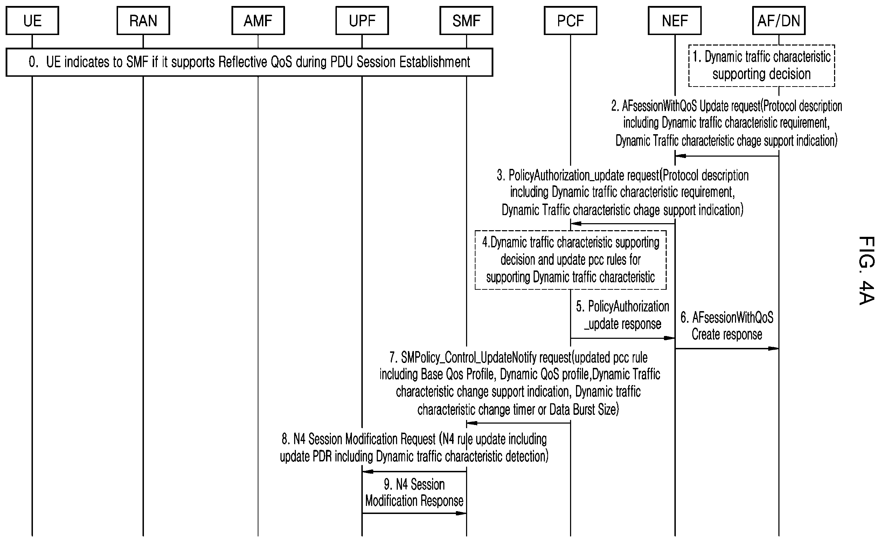

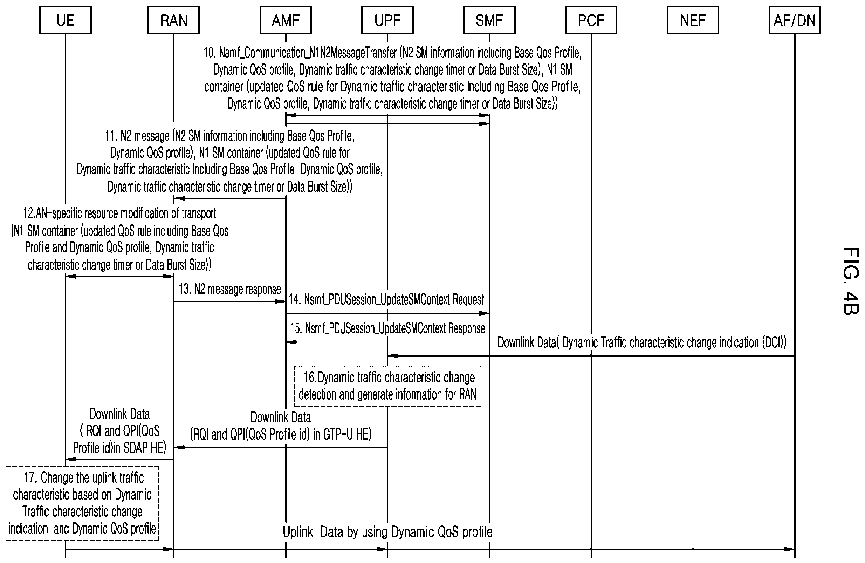

FIG. 4A is a diagram showing an example of a method of supporting a temporary traffic change in a service flow by detecting the traffic characteristic change in the service flow and transmitting detected information to the RAN, according to an embodiment of the present disclosure. FIG. 4B is a diagram showing an example of a method of supporting a temporary traffic change in a service flow by detecting the traffic characteristic change in the service flow and transmitting detected information to the RAN, according to an embodiment of the present disclosure. For example, FIG. 4B may illustrate one or more operations subsequent to FIG. 4A.

The UPF according to an embodiment of the present disclosure may use reflective QoS indicator (RQI) information as a method of transmitting the dynamic traffic characteristic change information in the DL. In this case, the AF may indicate performance of an operation of generating dynamic traffic characteristic change occurrence information for transmitting the dynamic traffic characteristic change occurrence information by using RQI, when a corresponding PDU session and a corresponding terminal support a reflective QoS within a requirement for generating the dynamic traffic characteristic change occurrence information. Also, when it is possible to use the reflective QoS, the RAN and the UE may be set to perform using of a dynamic QoS profile, based on corresponding indication information when the RQI information is received.

In operation 1, the AF may determine a service request taking into account the traffic characteristic change in the service flow currently in service, according to determination by the AS or the AF.

In operation 2, the AF may transmit, to the NEF, an AF session service operation create/update request (AFsessionWithQoS create/update request) message including a QoS requirement including indication requesting dynamic traffic characteristic change service support (dynamic traffic characteristic change support indication), traffic characteristic change detection information (dynamic traffic characteristic detection information), traffic characteristic information (dynamic traffic characteristic requirement), and a requirement for generating dynamic traffic characteristic change occurrence information. The traffic characteristic information (the dynamic traffic characteristic requirement) transmitted from the AF may include information about traffic characteristics (a base traffic characteristic and a traffic characteristic to be changed) in the flow, the information including MDBV information and/or information of at least one of a type, resolution, data rate, frame rate, and data burst size of content. The traffic characteristic change detection information (the dynamic traffic characteristic detection information) transmitted from the AF may include at least one of: transmission and location information of the traffic characteristic change information in a packet, such as DCI, a dynamic traffic characteristic change flag, start time of data burst, end of data burst, etc., explicitly transmitted through an RTP HE field, etc.; or information implicitly transmitted for measuring a packet characteristic change (e.g., information for comparing a traffic change between packets, based on an average data rate between the packets or a threshold value of a data rate of the base QoS profile (e.g., threshold for base QoS profile), a distance (based on a frame rate) between the packets, a packet transmission pattern (based on GOP information), and periodicity information).

In operation 3, service QoS requirement information including the indication requesting the dynamic traffic characteristic change service support (the dynamic traffic characteristic change support indication), the traffic characteristic change detection information (the dynamic traffic characteristic detection information), and the traffic characteristic information (the dynamic traffic characteristic requirement) may be authorized by the NEF, and thereafter, may be transmitted to the PCF through a policy authorization service create/update request (PolicyAuthorization create/update request).

In operation 4, when the PCF determines the dynamic traffic characteristic change service support, based on the indication requesting the dynamic traffic characteristic change service support (the dynamic traffic characteristic change support indication), the traffic characteristic change detection information (the dynamic traffic characteristic detection information), the traffic characteristic information (the dynamic traffic characteristic requirement), and the requirement for generating the dynamic traffic characteristic change occurrence information received from the AF, the PCF may perform a PCC rule update for supporting the corresponding service. A QoS profile (e.g., a dynamic QoS profile) taking into account a traffic characteristic to be temporarily changed, in addition to a profile of an existing QoS flow (e.g., a base QoS profile), may be additionally generated in the updated PCC rule in order to support the temporary traffic characteristic change, and the RAN may perform changing of characteristics (e.g., the MDBV) of the QoS flow in service for only a predetermined time period by using the corresponding dynamic QoS profile. Also, the PCC rule may include information for supporting an operation of traffic characteristic change detection in a data flow, an operation of generation of traffic characteristic change notification information, etc. performed by the UPF.

In operation 5 and operation 6, the PCF may transmit, to the AF, whether to accept or reject the request for the dynamic traffic characteristic change service support, put by the AF, through a PolicyAuthorization_create/update response message and an AFsessionWithQoS create/update response message. For example, the PCF may transmit the PolicyAuthorization_create/update response message to the NEF, and the NEF may transmit the AFsessionWithQoS create/update response message to the AF.

In operation 7, the PCF may determine policy update, based on the dynamic traffic characteristic change service information received from the AF in operation 4, and may transmit a PCC rule updated based on the determined policy update to the SMF. The updated PCC rule may include information of at least one of: QoS flow-related information to be transmitted to the RAN and/or the UE, such as the dynamic traffic characteristic detection information, the base QoS profile, the dynamic QoS profile, the data burst size, etc., for supporting the operation of the traffic characteristic change detection in the data flow; the dynamic traffic characteristic change support indication indicating the dynamic traffic characteristic change service support and transmission of service-related information; information (dynamic traffic characteristic change timer) about how long the changed traffic characteristic change information (the dynamic QoS profile) is to be applied; and the requirement for generating the dynamic traffic characteristic change occurrence information.

The SMF may determine to transmit, to the UPF and the RAN, information for supporting a service supporting the temporary traffic characteristic change based on the PCC rule information received from the PCF. The SMF may perform an operation of generating an N4 rule for requesting an operation of generating information for the UPF to transmit the traffic characteristic change detection and traffic characteristic change information in the service data flow to the RAN based on the dynamic traffic characteristic change support indication information and the traffic characteristic change detection information (the dynamic traffic characteristic detection information). Also, the SMF may determine an operation of transmitting the base QoS profile, the dynamic QoS profile, the data burst size, etc. to the RAN. Also, the SMF may determine to notify an occurrence of the dynamic traffic characteristic change to the RAN and the UE by using the RQI information, when the corresponding service data flow supports the reflective QoS, based on reflective QoS support request information transmitted from the UE through a PDU session establish or change operation process. To this end, the SMF may additionally include, in the N4 rule, an operation of marking the RQI in the GTP-U HE when the traffic characteristic change occurs.

In operations 8 and 9, the SMF may transmit, to the UPF, an SDF template including information, etc. about the operation of generating the information for transmitting, to the RAN, the traffic characteristic change detection and traffic characteristic change information in the service data flow through an N4 session create/modify process. After the UPF receives, from the SMF, the N4 rule including the requirement for the generation of the traffic characteristic change detection and traffic characteristic change notification information in the service data flow, the UPF may perform an operation of monitoring the traffic transmitted in the corresponding service data flow. The data traffic monitoring operation may be performed based on the traffic characteristic change detection information (dynamic traffic characteristic detection information) transmitted from the AF. For example, when the AS notifies that a characteristic of a predetermined packet is explicitly changed, through a dynamic traffic characteristic change flag, etc. transmitted through an RTP HE field, etc., information that the corresponding traffic characteristic change may be detected through information in a predetermined header or header information in a protocol may be transmitted. Alternatively, when the AS, etc. are not able to transmit explicit packet characteristic change information through a predetermined header or a header field in a protocol, related information for measuring an implicit packet characteristic change may be transmitted.

For example, when a pattern between packets or of the packets change, based on measuring an average data rate between the packets, or monitoring a distance (based on a frame rate) between the packets or a packet transmission pattern (based on GOP information), the UPF may recognize the change of the characteristic of the traffic received from the AS through the service data flow. The UPF that recognizes the change of the corresponding traffic characteristic may generate the traffic characteristic change notification information for requesting the QoS profile information taking into account the changed traffic characteristic information to be applied to the corresponding QoS flow. The traffic characteristic change notification information generated by the UPF may be directly transmitted to the RAN by marking the RQI in the GTP-U extension field.

In operation 10, the base QoS profile, the dynamic QoS profile, the data burst size, etc. generated or updated by the PCF based on the dynamic traffic characteristic change support service request information of the AF in operation 4, may be transmitted to the AMF. An N1N2 message transmitted to the AMF may include N2 SM information including the base QoS profile, the dynamic QoS profile, and the data burst size transmitted to the RAN and a N1 SM container including the information, such as the base QoS profile, the dynamic QoS profile, the data burst size, for supporting the dynamic traffic characteristic change support service in the UL traffic. The information, such as the base QoS profile, the dynamic QoS profile, and the data burst size, included in the N2 SM information transmitted to the RAN, and the information, such as the base QoS profile, the dynamic QoS profile, and the data burst size, in the N1 SM container transmitted to the UE, may be the same as each other or different from each other according to service operator's settings, etc.

In operation 11, the AMF may transmit, to the RAN, through an N2 message, the N2 SM information and the N1 SM container including information of at least one of the base QoS profile, the dynamic QoS profile, and the data burst size for supporting the dynamic traffic characteristic change from the SMF.

In operation 12, the RAN may transmit, to the UE, the N1 SM container including the information, such as the base QoS profile, the dynamic QoS profile, and the data burst size, for supporting the dynamic traffic characteristic change support service in the UL traffic.

In operations 13 and 14, the UE and the RAN may transmit a response message, etc. of the N2 message to the SMF. For example, the RAN may transmit the N2 message response message to the AMF, and the AMF may transmit an Nsmf_PDUSession_UpdateSMContextRequest message to the SMF.

In operation 15, the SMF may transmit an Nsmf_PDUSession_UpdateSMContextResponse message to the AMF.

In operation 16, the UPF that recognizes the change of the corresponding traffic characteristic may generate the traffic characteristic change notification information for requesting the QoS profile information (the dynamic QoS profile) taking into account the changed traffic characteristic information to be applied to the corresponding QoS flow. The traffic characteristic change notification information generated by the UPF may be directly transmitted to the RAN in a user plane or may be transmitted to the RAN through the SMF in a CP. For example, the UPF may directly transmit, to the RAN, the traffic characteristic change notification information in the form of DCI or a dynamic traffic characteristic change flag, in the user plane by marking the traffic characteristic change notification information in a GTP-U extension header. Alternatively, the UPF may transmit the DCI to the SMF through an event reporting message created by the UPF, and the SMF may transmit the corresponding traffic characteristic change notification information to the RAN through the AMF.

Thereafter, when traffic change event-related notification information detected through the UPF is transmitted through the UPF or the SMF, the RAN may process the traffic in the corresponding QoS flow, based on the information, such as the dynamic QoS profile, the data burst size, etc. received from the SMF. When there is a requirement for supporting a temporary traffic characteristic change also in the UL data, the SMF may provide the base QoS profile, the dynamic QoS profile, the data burst size, etc. to the UE through an N1 SM container. When the AS requests a traffic characteristic change with respect to the UL data, the UPF or the SMF may transmit the traffic characteristic change notification information detected by the UPF to the UE through the RAN, so that the temporary traffic characteristic change transmitted by the UE may be supported.

In operation 17, the UE may perform an operation of transmitting, to the RAN, UL traffic using the dynamic QoS profile, based on the RQI information in the SDAP header. The RAN that receives the RQI from the UPF in operation 16 may transmit the RQI information to the UE and, simultaneously, may understand that the dynamic QoS profile has to be applied to the UL traffic transmitted from the corresponding UE. Also, the RAN and the UE may perform an UL traffic processing operation using the dynamic QoS profile during a designated time period (the burst data size or the dynamic traffic characteristic change timer) transmitted through the SMF, based on the information, such as the burst data size, the dynamic traffic characteristic change timer, etc., transmitted through the SMF. When additional RQI is transmitted within the burst data size or the dynamic traffic characteristic change timer, the time of the burst data size or the dynamic traffic characteristic change timer may be extended, and the RAN and the UE may perform the UL traffic processing operation using the dynamic QoS profile by further taking into account the extended time.

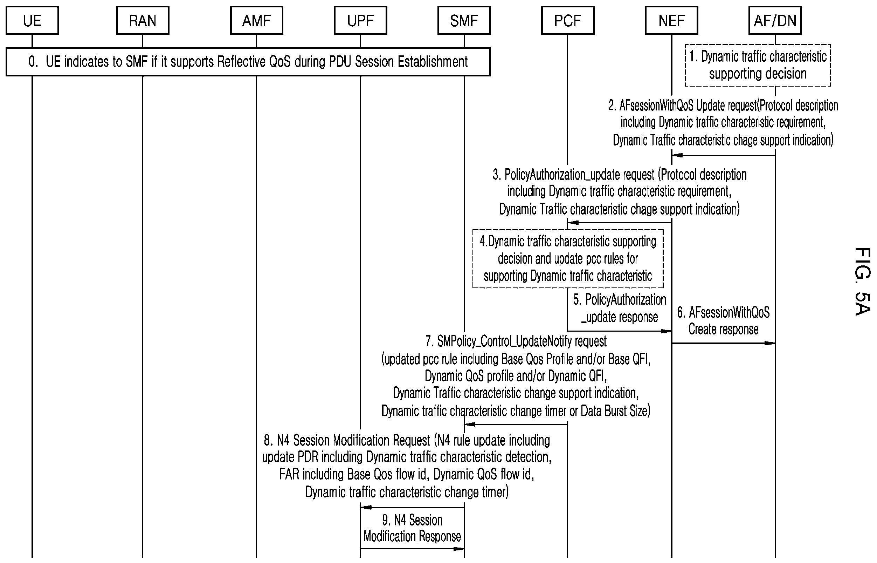

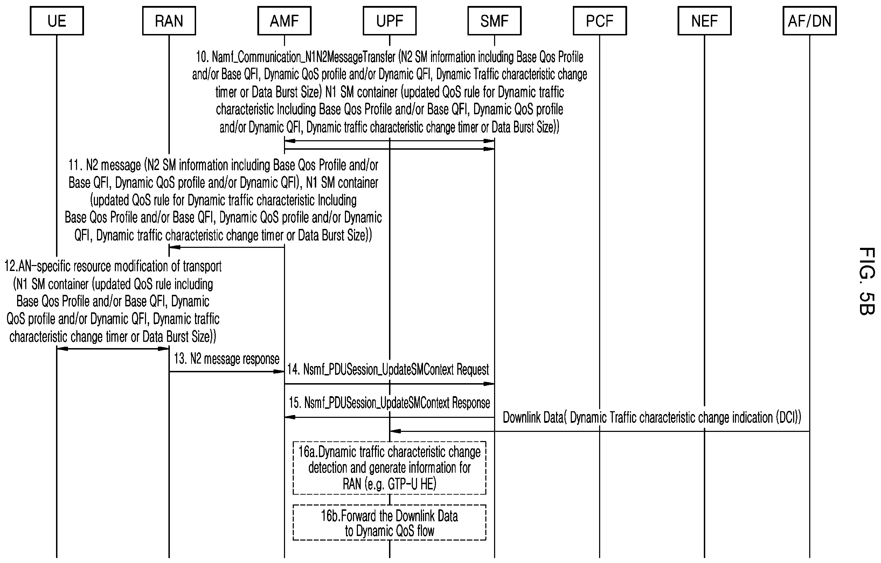

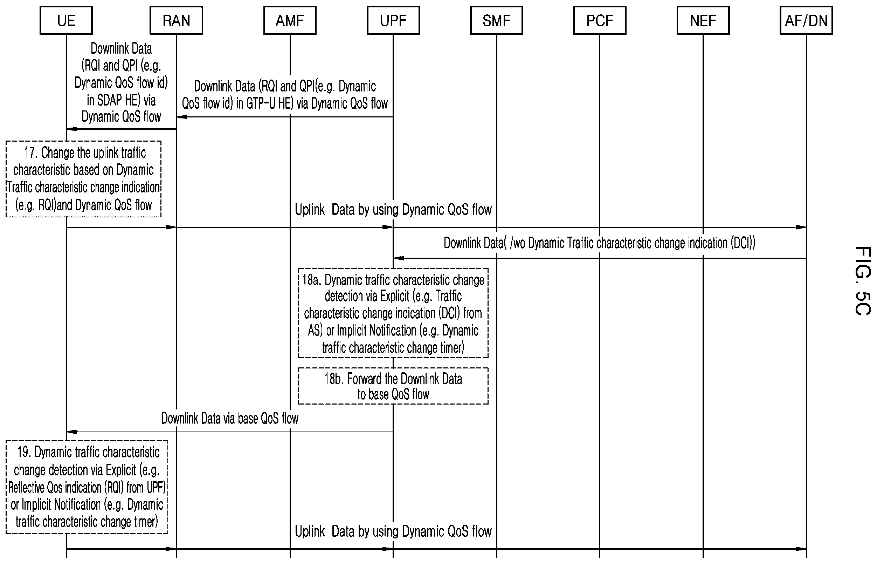

FIG. 5A is a diagram showing an example of a method of supporting a temporary traffic change in a service flow by detecting the traffic characteristic change in the service flow and transmitting detected information to the RAN, according to an embodiment of the present disclosure. FIG. 5B is a diagram showing an example of a method of supporting a temporary traffic change in a service flow by detecting the traffic characteristic change in the service flow and transmitting detected information to the RAN, according to an embodiment of the present disclosure. FIG. 5C is a diagram showing an example of a method of supporting a temporary traffic change in a service flow by detecting the traffic characteristic change in the service flow and transmitting detected information to the RAN, according to an embodiment of the present disclosure. For example, FIG. 5B may illustrate one or more operations subsequent to FIG. 5A. For example, FIG. 5C may illustrate one or more operations subsequent to FIG. 5B.

The UPF according to an embodiment of the present disclosure may use RQI information as a method of transmitting the dynamic traffic characteristic change information in the DL. In this case, the AF may indicate performance of an operation of generating dynamic traffic characteristic change occurrence information for transmitting the dynamic traffic characteristic change occurrence information by using RQI, when a corresponding PDU session and a corresponding terminal support a reflective QoS within a requirement for generating the dynamic traffic characteristic change occurrence information. Also, when it is possible to use the reflective QoS, the RAN/UPF and the UE may be set to perform traffic transmission using a QoS flow in which a dynamic QoS profile is applied, based on corresponding indication information when the RQI information is received.

In operation 1, the AF may determine a service request taking into account the traffic characteristic change in the service flow currently in service, according to determination by the AS or the AF.

In operation 2, the AF may transmit, to the NEF, an AF session service operation create/update request (AFsessionWithQoS create/update request) message including a QoS requirement including indication requesting dynamic traffic characteristic change service support (dynamic traffic characteristic change support indication), traffic characteristic change detection information (dynamic traffic characteristic detection information), traffic characteristic information (dynamic traffic characteristic requirement), and a requirement for generating dynamic traffic characteristic change occurrence information. The traffic characteristic information (the dynamic traffic characteristic requirement) transmitted from the AF may include information about traffic characteristics (a base traffic characteristic and a traffic characteristic to be changed) in the flow, the information including MDBV information and/or information of at least one of a type, resolution, data rate, frame rate, and data burst size of content. The traffic characteristic change detection information (the dynamic traffic characteristic detection information) transmitted from the AF may include at least one of: transmission and location information of the traffic characteristic change information in a packet, such as DCI, a dynamic traffic characteristic change flag, start time of data burst, end of data burst, etc., explicitly transmitted through an RTP HE field, etc.; or information implicitly transmitted for measuring a packet characteristic change (e.g., information for comparing a traffic change between packets, based on an average data rate between the packets or a threshold value of a data rate of the base QoS profile (e.g., threshold for base QoS profile), a distance (based on a frame rate) between the packets, a packet transmission pattern (based on GOP information), and periodicity information).

In operation 3, service QoS requirement information including the indication requesting the dynamic traffic characteristic change service support (the dynamic traffic characteristic change support indication), the traffic characteristic change detection information (the dynamic traffic characteristic detection information), and the traffic characteristic information (the dynamic traffic characteristic requirement) may be authorized by the NEF, and thereafter, may be transmitted to the PCF through a policy authorization service create/update request (PolicyAuthorization create/update request).

In operation 4, when the PCF determines the dynamic traffic characteristic change service support, based on the indication requesting the dynamic traffic characteristic change service support (the dynamic traffic characteristic change support indication), the traffic characteristic change detection information (the dynamic traffic characteristic detection information), the traffic characteristic information (the dynamic traffic characteristic requirement), and the requirement for generating the dynamic traffic characteristic change occurrence information received from the AF, the PCF may perform a PCC rule update for supporting the corresponding service. A QoS profile (e.g., a dynamic QoS profile) taking into account a traffic characteristic to be temporarily changed, in addition to a profile of an existing QoS flow (e.g., a base QoS profile), may be additionally generated in the updated PCC rule in order to support the temporary traffic characteristic change, and the RAN may perform changing of characteristics (e.g., the MDBV) of the QoS flow in service for only a predetermined time period by using the corresponding dynamic QoS profile. According to settings of a service operator or settings of a network operator, the dynamic QoS profile may be used in the same QoS flow, or a QoS flow in which an additional dynamic QoS profile is applied may be used. According to an embodiment of the present disclosure, when the QoS flow in which the additional dynamic QoS profile is applied is used, PCC rule information including each of QoS flow identifier (QFI) information in which the base QoS profile is applied and a QFI in which the dynamic QoS profile is applied, may be generated. Also, the PCC rule may include information for supporting an operation of traffic characteristic change detection in a data flow, an operation of generation of traffic characteristic change notification information, etc. performed by the UPF.

In operation 5 and operation 6, the PCF may transmit, to the AF, whether to accept or reject the request for the dynamic traffic characteristic change service support, put by the AF, through a PolicyAuthorization_create/update response message and an AFsessionWithQoS create/update response message. For example, the PCF may transmit the PolicyAuthorization_create/update response message to the NEF, and the NEF may transmit the AFsessionWithQoS create/update response message to the AF.

In operation 7, the PCF may determine policy update, based on the dynamic traffic characteristic change service information received from the AF in operation 4, and may transmit a PCC rule updated based on the determined policy update to the SMF. The updated PCC rule may include information of at least one of: QoS flow-related information to be transmitted to the RAN and/or the UE, such as the dynamic traffic characteristic detection information, the base QoS profile and/or a base QFI, the dynamic QoS profile and/or a dynamic QFI, the data burst size, etc., for supporting the operation of the traffic characteristic change detection in the data flow; the dynamic traffic characteristic change support indication indicating the dynamic traffic characteristic change service support and transmission of service-related information; information (dynamic traffic characteristic change timer) about how long the changed traffic characteristic change information (the dynamic QoS profile) is to be applied; and the requirement for generating the dynamic traffic characteristic change occurrence information.

The SMF may determine to transmit, to the UPF and the RAN, information for supporting a service supporting the temporary traffic characteristic change based on the PCC rule information received from the PCF. The SMF may perform an operation of generating an N4 rule for requesting an operation of generating information for the UPF to transmit the traffic characteristic change detection and traffic characteristic change information in the service data flow to the RAN based on the dynamic traffic characteristic change support indication information and the traffic characteristic change detection information (the dynamic traffic characteristic detection information). Also, the SMF may determine an operation of transmitting the base QoS profile, the dynamic QoS profile, the data burst size, etc. to the RAN. Also, the SMF may determine to notify an occurrence of the dynamic traffic characteristic change to the RAN and the UE by using the RQI information, when the corresponding service data flow supports the reflective QoS, based on reflective QoS support request information transmitted from the UE through a PDU session establish or change operation process. To this end, the SMF may additionally include, in the N4 rule, an operation of marking the RQI in the GTP-U HE when the traffic characteristic change occurs. According to an embodiment of the present disclosure, according to the settings of the service operator or the settings of the network operator, the dynamic QoS profile may be used by using the additional QoS flow. When the QoS flow (base QoS flow) in which the base QoS profile is applied and the QoS flow (dynamic QoS flow) in which the additional dynamic QoS profile is applied are used as described above, forwarding action rule (FAR) including each of the QFI information in which the base QoS profile is applied and the QFI in which the dynamic QoS profile is applied may be included in the N4 rule. Also, timer information (e.g., dynamic traffic characteristic change timer) maintaining the corresponding QoS flow may be included together in the FAR information.

In operations 8 and 9, the SMF may transmit, to the UPF, an SDF template including information, etc. about the operation of generating the information for transmitting, to the RAN, the traffic characteristic change detection and traffic characteristic change information in the service data flow through an N4 session create/modify process. After the UPF receives, from the SMF, the N4 rule including the requirement for the generation of the traffic characteristic change detection and traffic characteristic change notification information in the service data flow, the UPF may perform an operation of monitoring the traffic transmitted in the corresponding service data flow. The data traffic monitoring operation may be performed based on the traffic characteristic change detection information (dynamic traffic characteristic detection information) transmitted from the AF. For example, when the AS notifies that a characteristic of a predetermined packet is explicitly changed, through a dynamic traffic characteristic change flag, etc. transmitted through an RTP HE field, etc., information that the corresponding traffic characteristic change may be detected through information in a predetermined header or header information in a protocol may be transmitted. Alternatively, when the AS, etc. are not able to transmit explicit packet characteristic change information through a predetermined header or a header field in a protocol, related information for measuring an implicit packet characteristic change may be transmitted.

For example, when a pattern between packets or of the packets change, based on measuring an average data rate between the packets, or monitoring a distance (based on a frame rate) between the packets or a packet transmission pattern (based on GOP information), the UPF may recognize the change of the characteristic of the traffic received from the AS through the service data flow. The UPF that recognizes the change of the corresponding traffic characteristic may generate the traffic characteristic change notification information for requesting the QoS profile information taking into account the changed traffic characteristic information to be applied to the corresponding QoS flow. The traffic characteristic change notification information generated by the UPF may be directly transmitted to the RAN by marking the RQI in the GTP-U extension field. According to an embodiment of the present disclosure, when the dynamic QoS profile is used by using the additional QoS flow according to the settings of the service operator or the settings of the network operator, the UPF may perform a forwarding operation to the additional QoS flow, when a traffic change is detected based on the explicit or implicit information included in the N4 rule transmitted from the SMF. Also, when the timer information (e.g., the dynamic traffic characteristic change timer) maintaining the corresponding changed QoS flow (e.g., the dynamic QoS flow) is included together in the N4 rule, the UPF may perform a traffic characteristic change indication (e.g., RQI) marking operation in the GTP-U extension header field and the forwarding operation to the dynamic QoS flow only within the corresponding timer.

In operation 10, the base QoS profile, the dynamic QoS profile, the data burst size, etc. generated or updated by the PCF based on the dynamic traffic characteristic change support service request information of the AF in operation 4, may be transmitted to the AMF. An N1N2 message transmitted to the AMF may include N2 SM information including the base QoS profile, the dynamic QoS profile, and the data burst size transmitted to the RAN and a N1 SM container including the information, such as the base QoS profile, the dynamic QoS profile, the data burst size, for supporting the dynamic traffic characteristic change support service in the UL traffic. The information, such as the base QoS profile, the dynamic QoS profile, and the data burst size, included in the N2 SM information transmitted to the RAN, and the information, such as the base QoS profile, the dynamic QoS profile, and the data burst size, in the N1 SM container transmitted to the UE, may be the same as each other or different from each other according to service operator's settings, etc.

In operation 11, the AMF may transmit, to the RAN, through an N2 message, the N2 SM information and the N1 SM container including information of at least one of the base QoS profile and/or the base QFI, the dynamic QoS profile and/or the dynamic QFI, and the data burst size for supporting the dynamic traffic characteristic change from the SMF.

In operation 12, the RAN may transmit, to the UE, the N1 SM container including the information, such as the base QoS profile and/or the base QFI, the dynamic QoS profile and/or the dynamic QFI, and the data burst size, for supporting the dynamic traffic characteristic change support service in the UL traffic.

In operations 13 and 14, the UE and the RAN may transmit a response message, etc. of the N2 message to the SMF. For example, the RAN may transmit the N2 message response message to the AMF, and the AMF may transmit an Nsmf_PDUSession_UpdateSMContextRequest message to the SMF.

In operation 15, the SMF may transmit an Nsmf_PDUSession_UpdateSMContextResponse message to the AMF.

In operation 16a, the UPF that recognizes the change of the corresponding traffic characteristic may generate the traffic characteristic change notification information for requesting the QoS profile information (the dynamic QoS profile) taking into account the changed traffic characteristic information to be applied to the corresponding QoS flow. The traffic characteristic change notification information generated by the UPF may be directly transmitted to the RAN in a user plane or may be transmitted to the RAN through the SMF in a CP. For example, the UPF may directly transmit, to the RAN, the traffic characteristic change notification information in the form of DCI or a dynamic traffic characteristic change flag, in the user plane by marking the traffic characteristic change notification information in a GTP-U extension header. Alternatively, the UPF may transmit the DCI to the SMF through an event reporting message created by the UPF, and the SMF may transmit the corresponding traffic characteristic change notification information to the RAN through the AMF.

Thereafter, when traffic change event-related notification information detected through the UPF is transmitted through the UPF or the SMF, the RAN may process the traffic in the corresponding QoS flow, based on the information, such as the dynamic QoS profile, the data burst size, etc. received from the SMF. When there is a requirement for supporting a temporary traffic characteristic change also in the UL data, the SMF may provide the base QoS profile, the dynamic QoS profile, the data burst size, etc. to the UE through an N1 SM container. When the AS requests a traffic characteristic change with respect to the UL data, the UPF or the SMF may transmit the traffic characteristic change notification information detected by the UPF to the UE through the RAN, so that the temporary traffic characteristic change transmitted by the UE may be supported.

In operation 16b, when the UPF determines to support the temporary traffic characteristic change using the additional QoS flow according to the policy of the service operator or the network operator, the UPF may forward the changed traffic characteristic to the dynamic QoS flow, based on the FAR including the base QFI and the dynamic QFI information received through the N4 rule. When the additional dynamic QoS flow is used, the UPF may additionally mark the additionally changed dynamic QFI information in the RQI marking operation within the GTP-U extension header and transmit the additionally changed dynamic QFI information to the RAN in operation 16a.

In operation 17, the UE may perform an operation of transmitting, to the RAN, UL traffic using the dynamic QoS profile and/or the dynamic QFI, based on the RQI information in the SDAP header. The RAN that receives the RQI from the UPF in operation 16 may transmit the RQI information to the UE and, simultaneously, may understand that the dynamic QoS profile has to be applied to the UL traffic transmitted from the corresponding UE. When it is determined to support the temporary traffic characteristic change using the additional QoS flow according to policy of the service operator or the network operator, the UE that receives the dynamic QFI value and the RQI from the UPF and the RAN through the SDAP header may determine UL traffic transmission using the dynamic QoS flow for the UL traffic transmitted from the UE.

Also, the RAN/UPF and the UE may perform an UL traffic processing operation using the dynamic QoS profile during a designated time period (the burst data size or the dynamic traffic characteristic change timer) transmitted through the SMF, based on the information, such as the burst data size, the dynamic traffic characteristic change timer, etc., transmitted through the SMF. When additional RQI is transmitted within the burst data size or the dynamic traffic characteristic change timer, the time of the burst data size or the dynamic traffic characteristic change timer may be extended, and the RAN and the UE may perform the UL traffic processing operation using the dynamic QoS profile by further taking into account the extended time.

In operation 18a, the UPF may perform changing of an operation of supporting the traffic characteristic change, based on the explicit or implicit information from the AS. For example, the UPF that detects a change in traffic characteristic change indication information including the DCI, expedite indication, or the like from the AS may determine changing of the traffic forwarding operation from the dynamic QoS flow to the base QoS flow. When the UPF performs traffic characteristic change detection using the explicit information, the UPF may determine the changing, based on whether or not corresponding traffic characteristic change indication exists. Alternatively, the UPF may determine the changing of the traffic forwarding operation from the dynamic QoS flow to the base QoS flow, based on the dynamic traffic characteristic change timer received from the AF, etc.

In operation 18b, the UPF that detects the change in the traffic characteristic change indication information in operation 18a may perform the forwarding operation to the base QoS flow after stopping the marking operation of the RQI information and the dynamic QFI information within the GTP-U extension header field.

In operation 19, the UE that receives a packet not including additional RQI and dynamic QFI information from the RAN may perform an UL traffic processing operation using the previously set base QoS flow.

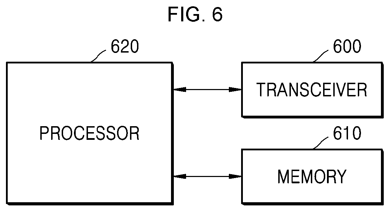

FIG. 6 is a block diagram showing an example of a structure of a terminal, according to an embodiment of the present disclosure.

The terminal according to an embodiment of the present disclosure may include a processor 620 configured to control general operations of the terminal, a transceiver 600 including a transmitter and a receiver, and memory 610. However, it is not limited to the example described above. The terminal may include more or fewer components than those illustrated in FIG. 6.

According to an embodiment of the present disclosure, the transceiver 600 may transmit and receive signals to and from NEs or other terminals. The signals transmitted and received to and from the NEs may include control information and data. Also, the transceiver 600 may receive the signals through wireless channels and output the signals to the processor 620 and may transmit signals output from the processor 620 through the wireless channels.

According to an embodiment of the present disclosure, the processor 620 may control the terminal to perform any one operation in the embodiments described above. The processor 620, the memory 610, and the transceiver 600 may not necessarily have to be implemented as separate modules and may be realized as one component, for example, as a single chip. Also, the processor 620 and the transceiver 600 may be electrically connected to each other. Also, the processor 620 may correspond to an application processor (AP), a communication processor (CP), an application-specific circuit, or at least one processor.

According to an embodiment of the present disclosure, the memory 610 may store data, such as basic programs for the operation of the terminal, application programs, and configuration information. In particular, the memory 610 may provide the stored data in response to a request of the processor 620. The memory 610 may include a storage medium, such as read-only memory (ROM), random-access memory (RAM), a hard disk, compact disk (CD)-ROM, a digital versatile disk (DVD), etc., or a combination of the storage media. Also, the memory 610 may include a plurality of memories. Also, the processor 620 may execute the embodiments of the present disclosure described above based on the programs stored in the memory 610, the programs being configured to execute the embodiments of the present disclosure described above.

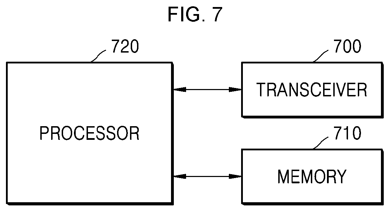

FIG. 7 is a diagram showing an example of a structure of a base station or an NE, according to an embodiment of the present disclosure.

The base station or the network entity according to an embodiment of the present disclosure may include a processor 720 configured to control general operations of the base station or the network entity, a transceiver 700 including a transmitter and a receiver, and memory 710. However, it is not limited to the example described above. The base station or the NE may include more or fewer components than those illustrated in FIG. 7.

According to an embodiment of the present disclosure, the transceiver 700 may transmit and receive signals to and from at least one of other NEs or the terminal. The signals transmitted and received to and from the at least one of the other NEs or the terminal may include control information and data.

According to an embodiment of the present disclosure, the processor 720 may control the NE to perform any one operation in the embodiments described above. The processor 720, the memory 710, and the transceiver 700 may not necessarily have to be implemented as separate modules and may be realized as one component, for example, as a single chip. Also, the processor 720 and the transceiver 700 may be electrically connected to each other. Also, the processor 720 may correspond to an AP, a CP, an application-specific circuit, or at least one processor.

According to an embodiment of the present disclosure, the memory 710 may store data, such as basic programs for the operation of the base station or the NE, application programs, and configuration information. In particular, the memory 710 may provide the stored data in response to a request of the processor 720. The memory 710 may include a storage medium, such as ROM, RAM, a hard disk, CD-ROM, a DVD, etc., or a combination of the storage media. Also, the memory 710 may include a plurality of memories. Also, the processor 720 may execute the embodiments of the present disclosure described above based on the programs stored in the memory 710, the programs being configured to execute the embodiments of the present disclosure described above.

According to an embodiment of the present disclosure, a PCF entity in a wireless communication system may include a transceiver and at least one processor connected to the transceiver. According to an embodiment of the present disclosure, the at least one processor may be configured to receive a request message associated with a traffic characteristic in a target service flow. According to an embodiment of the present disclosure, the at least one processor may be configured to generate, based on the request message, first PCC rule information for a first traffic characteristic in the target service flow and second PCC rule information for a second traffic characteristic in the target service flow. According to an embodiment of the present disclosure, the at least one processor may be configured to transmit the first PCC rule information and the second PCC rule information to an SMF entity.

According to an embodiment of the present disclosure, the request message may include a QoS requirement for the first traffic characteristic and a QoS requirement for the second traffic characteristic.

According to an embodiment of the present disclosure, the at least one processor may be configured to generate the first PCC rule information based on the QoS requirement for the first traffic characteristic. According to an embodiment of the present disclosure, the at least one processor may be configured to generate the second PCC rule information based on the QoS requirement for the second traffic characteristic.

According to an embodiment of the present disclosure, the first PCC rule information may be used to generate first N4 rule information for the first traffic characteristic. According to an embodiment of the present disclosure, the second PCC rule information may be used to generate second N4 rule information for the second traffic characteristic.

According to an embodiment of the present disclosure, the request message may include information about traffic characteristic detection.

According to an embodiment of the present disclosure, the information about traffic characteristic detection may include information indicating that traffic characteristic information is included in an RTP HE in the target service flow.

According to an embodiment of the present disclosure, a rule associated with the second traffic characteristic may include information indicating RQI marking of a UPF entity.

According to an embodiment of the present disclosure, an SMF entity in a wireless communication system may include a transceiver and at least one processor connected to the transceiver. According to an embodiment of the present disclosure, the at least one processor may be configured to receive, from a PCF entity, first PCC rule information for a first traffic characteristic in a target service flow and second PCC rule information for a second traffic characteristic in the target service flow. According to an embodiment of the present disclosure, the at least one processor may be configured to generate first N4 rule information for the first traffic characteristic and second N4 rule information for the second traffic characteristic, based on the first PCC rule information and the second PCC rule information. According to an embodiment of the present disclosure, the at least one processor may be configured to transmit the first N4 rule information and the second N4 rule information to a UPF entity.

According to an embodiment of the present disclosure, the first PCC rule information and the second PCC rule information may be generated by the PCF entity, based on a request message associated with a traffic characteristic in the target service flow received by the PCF entity.

According to an embodiment of the present disclosure, the request message may include a QoS requirement for the first traffic characteristic and a QoS requirement for the second traffic characteristic. According to an embodiment of the present disclosure, the first PCC rule information may be generated based on the QoS requirement for the first traffic characteristic. According to an embodiment of the present disclosure, the second PCC rule information may be generated based on the QoS requirement for the second traffic characteristic.

According to an embodiment of the present disclosure, the request message may include information about traffic characteristic detection indicating that traffic characteristic information is included in an RTP HE in the target service flow.

According to an embodiment of the present disclosure, the UPF entity may detect, based on the information about traffic characteristic detection, a traffic characteristic of a packet in the RTP HE in the target service flow.

According to an embodiment of the present disclosure, a rule associated with the second traffic characteristic may include information indicating RQI marking of the UPF entity.

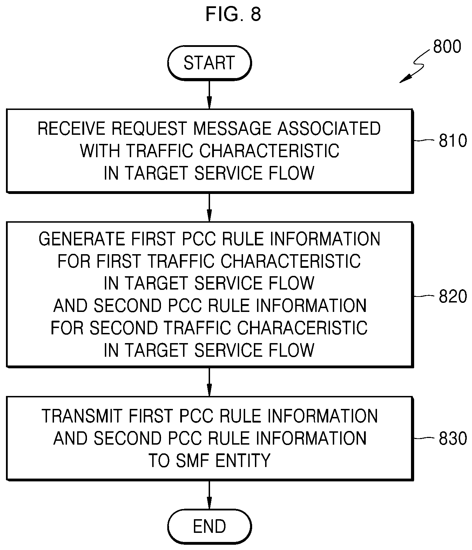

FIG. 8 is a diagram showing an example of a method performed by an NE, according to an embodiment of the present disclosure.

Referring to FIG. 8, a method 800 may include operations 810 to 830, but is not limited thereto. For example, the method 800 may further include other operations. For example, the method 800 may omit at least one of the operations 810 to 830. According to an embodiment of the present disclosure, the NE performing the method 800 may be a PCF, but is not limited thereto.

In operation 810, the NE may receive a request message associated with a traffic characteristic in a target service flow. According to an embodiment of the present disclosure, the request message may include a QoS requirement for the first traffic characteristic and a QoS requirement for the second traffic characteristic. According to an embodiment of the present disclosure, the request message may include information about traffic characteristic detection. According to an embodiment of the present disclosure, the information about traffic characteristic detection may include information indicating that traffic characteristic information is included in an RTP HE in the target service flow.

In operation 820, the NE may generate, based on the request message, first PCC rule information for a first traffic characteristic in the target service flow and second PCC rule information for a second traffic characteristic in the target service flow. According to an embodiment of the present disclosure, the NE may generate the first PCC rule information, based on the QoS requirement for the first traffic characteristic. According to an embodiment of the present disclosure, the NE may generate the second PCC rule information, based on the QoS requirement for the second traffic characteristic.

In operation 830, the NE may transmit the first PCC rule information and the second PCC rule information to an SMF entity. According to an embodiment of the present disclosure, the first PCC rule information may be used to generate first N4 rule information for the first traffic characteristic. According to an embodiment of the present disclosure, the second PCC rule information may be used to generate second N4 rule information for the second traffic characteristic.

According to an embodiment of the present disclosure, a rule associated with the second traffic characteristic may include information indicating RQI marking of a UPF entity.

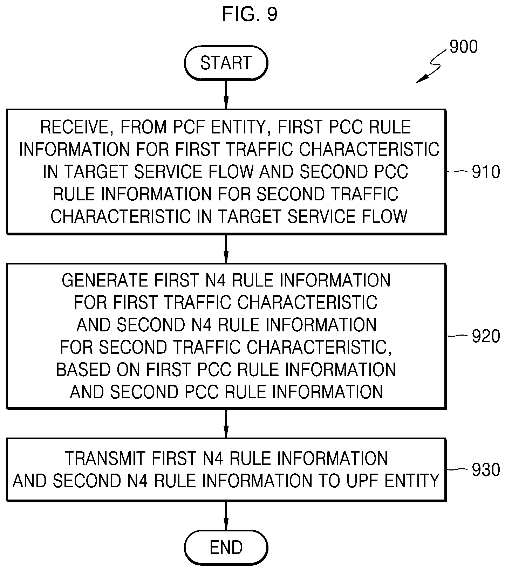

FIG. 9 is a diagram showing an example of a method performed by an NE, according to an embodiment of the present disclosure.

Referring to FIG. 9, a method 900 may include operations 910 to 930, but is not limited thereto. For example, the method 900 may further include other operations. For example, the method 900 may omit at least one of the operations 910 to 930. According to an embodiment of the present disclosure, the NE configured to perform the method 900 may be an SMF, but is not limited thereto.

In operation 910, the NE may be configured to receive, from a PCF entity, first PCC rule information for a first traffic characteristic in a target service flow and second PCC rule information for a second traffic characteristic in the target service flow. According to an embodiment of the present disclosure, the first PCC rule information and the second PCC rule information may be generated by the PCF entity, based on a request message associated with a traffic characteristic in the target service flow received by the PCF entity. According to an embodiment of the present disclosure, the request message may include a QoS requirement for the first traffic characteristic and a QoS requirement for the second traffic characteristic. According to an embodiment of the present disclosure, the first PCC rule information may be generated based on the QoS requirement for the first traffic characteristic. According to an embodiment of the present disclosure, the second PCC rule information may be generated based on the QoS requirement for the second traffic characteristic. According to an embodiment of the present disclosure, the request message may include information about traffic characteristic detection indicating that traffic characteristic information is included in an RTP HE in the target service flow.

In operation 920, the NE may generate first N4 rule information for the first traffic characteristic and second N4 rule information for the second traffic characteristic, based on the first PCC rule information and the second PCC rule information.

In operation 930, the NE may transmit the first N4 rule information and the second N4 rule information to a UPF entity. According to an embodiment of the present disclosure, the UPF entity may detect, based on the information about traffic characteristic detection, a traffic characteristic of a packet in the RTP HE in the target service flow.

According to an embodiment of the present disclosure, a rule associated with the second traffic characteristic may include information indicating RQI marking of the UPF entity.

According to one or more embodiments of the present disclosure, a method performed by a PCF entity in a wireless communication system may include receiving, from an AF entity, indication for support of a service in which a traffic characteristic is temporarily changed, information for detecting a traffic characteristic change, and traffic characteristic information, generating, based on the information, a base QoS profile to apply to a base service flow and a dynamic QoS profile to be used by taking into account a traffic characteristic to be temporarily changed, so as to support the traffic characteristic change in a service flow, and transmitting to an SMF, the base QoS profile, the dynamic QoS profile, and the information for detecting the traffic characteristic change.

According to one or more embodiments of the present disclosure, a method performed by an SMF entity in a wireless communication system may include receiving, from a PCF entity, a PCC rule including related information for supporting a service supporting a temporary traffic characteristic change, transmitting, to a UPF, N4 rule information including operations of generating a PDR based on information for detecting a traffic characteristic change and generating information for transmitting detected traffic characteristic change information to an RAN, and transmitting, to the RAN, base QoS profile and dynamic QoS profile information.

According to one or more embodiments of the present disclosure, a method performed by a UPF entity in a wireless communication system may include receiving, from an SMF, N4 rule information including operations of generating a PDR based on information for detecting a traffic characteristic change and generating information for transmitting detected traffic characteristic change information to an RAN, detecting a traffic characteristic based on the PDR based on the information for detecting the traffic characteristic change, generating the information for transmitting the detected traffic characteristic change information to the RAN, and transmitting the detected traffic characteristic change information to the RAN.

According to an embodiment of the present disclosure, a method performed by a UPF entity in a wireless communication system may include obtaining information associated with traffic characteristic change detection, monitoring data traffic based on the information associated with the traffic characteristic change detection, and, based on identifying a traffic characteristic change, transmitting traffic characteristic change notification information to a base station.

According to an embodiment of the present disclosure, a method and apparatus for effectively providing a service in a wireless communication system may be provided. The technical objectives to be achieved by the present disclosure are not limited to the technical problems described above. Other technical objectives that are not mentioned may be clearly understood by one of ordinary skill in the art from the present disclosure.

According to an embodiment of the present disclosure, there may be provided an apparatus and method for effectively providing services in a mobile communication system. The technical effects according to an embodiment of the present disclosure are not limited to the technical effects described in the present disclosure, and other effects that are not described in the present disclosure may be clearly understood by one of ordinary skill in the art from the detailed descriptions of the present disclosure.

It should be noted that the above-described diagrams, the example diagrams of the transmission method of control/data signals, the example diagrams of the operation procedure, and the diagrams are not intended to limit the scope of the claims of the present disclosure. That is, it shall not be interpreted that all components, entities, or operations described in the embodiment of the present disclosure are essential configurations for executing the disclosure, and the present disclosure may be realized to an extent to which the essence of the disclosure is not deteriorated, by including only some of the configurations described above. Furthermore, each embodiment may be operated by being combined with each other if necessary. For example, portions of the methods provided by the present disclosure may be combined with each other to enable the NE and the terminal to operate.

The operations of the base station or the terminal described above may be realized by including a memory device storing corresponding program codes as a component of the base station or the terminal device. That is, the base station or the controller of the terminal device may execute the operations described above, by reading and executing the program codes stored in the memory device by using the processor or a central processing unit (CPU).

The entities, various components of the base station or the terminal device, modules, etc. described in the present disclosure may operate by using a hardware circuit, for example, a complementary metal-oxide semiconductor-based logic circuit; firmware and software; and/or a hardware circuit, such as a combination of hardware, firmware, and/or software inserted into a machine-readable medium. For example, various electrical structures and methods may be executed by using electrical circuits, such as transistors, logic gates, and an application specific integrated circuit.

Methods according to the claims of the present disclosure or the embodiments described in the specification may be implemented in hardware, software, or a combination of hardware and software.

When the electrical structures and methods are implemented in software, a computer-readable recording medium having one or more programs (software modules) recorded thereon may be provided. One or more programs stored in the computer-readable storage medium are configured to be executable by one or more processors in an electronic device. The one or more programs include instructions for causing the electronic device to execute the methods according to the embodiments described in the claims or the specification of the present disclosure.

The programs (e.g., software modules or software) may be stored in non-volatile memory including RAM or flash memory, ROM, electrically erasable programmable read only memory (EEPROM), a magnetic disc storage device, a CD-ROM, a DVD, another optical storage device, or a magnetic cassette. Alternatively, the programs may be stored in a memory including a combination of some or all of the above-mentioned memory devices. Also, each constituent memory may include a plurality of memories.

Also, the programs may be stored in an attachable storage device which is accessible via a communication network such as the Internet, an intranet, a local area network (LAN), a wireless LAN (WLAN), or a storage area network (SAN), or a combination thereof. Such a storage device may access, via an external port, a device performing the embodiments of the present disclosure. Furthermore, a separate storage device on the communication network may access the electronic device performing the embodiments of the present disclosure.

In the afore-described detailed embodiments of the present disclosure, elements included in the disclosure are expressed in a singular or plural form according to the provided detailed embodiments. However, the singular or plural form is appropriately selected for convenience of descriptions and the present disclosure is not limited thereto. As such, an element expressed in a plural form may also be configured as a single element, and an element expressed in a singular form may also be configured as plural elements.

Although detailed embodiments have been described in the detailed description of the present disclosure, various modifications may be made without departing from the scope of the present disclosure. Therefore, the scope of the present disclosure should not be limited to the above-described embodiments and should be determined by the appended claims and the equivalents thereof.

## Claims

1. A method performed by a policy control function (PCF) entity in a wireless communication system, the method comprising:
receiving a request message associated with a traffic characteristic in a target service flow;
based on the request message, generating first policy and charging control (PCC) rule information for a first traffic characteristic in the target service flow and second PCC rule information for a second traffic characteristic in the target service flow; and
transmitting the first PCC rule information and the second PCC rule information to a session management function (SMF) entity.

2. The method of claim 1, wherein the request message comprises a quality of service (QoS) requirement for the first traffic characteristic and a QoS requirement for the second traffic characteristic.

3. The method of claim 2, wherein the generating comprises:
generating the first PCC rule information based on the QoS requirement for the first traffic characteristic; and
generating the second PCC rule information based on the QoS requirement for the second traffic characteristic.

4. The method of claim 1, wherein the first PCC rule information is used to generate first N4 rule information for the first traffic characteristic, and the second PCC rule information is used to generate second N4 rule information for the second traffic characteristic.

5. The method of claim 1, wherein the request message comprises information about traffic characteristic detection.

6. The method of claim 5, wherein the information about traffic characteristic detection comprises information indicating that traffic characteristic information is included in a real-time transport protocol (RTP) header extension (HE) in the target service flow.

7. The method of claim 1, wherein a rule associated with the second traffic characteristic comprises information indicating reflective QoS indication (RQI) marking of a user plane function (UPF) entity.

8. A method performed by a session management function (SMF) entity in a wireless communication system, the method comprising:
receiving, from a policy control function (PCF) entity, first policy and charging control (PCC) rule information for a first traffic characteristic in a target service flow and second PCC rule information for a second traffic characteristic in the target service flow;
generating, based on the first PCC rule information and the second PCC rule information, first N4 rule information for the first traffic characteristic and second N4 rule information for the second traffic characteristic; and
transmitting the first N4 rule information and the second N4 rule information to a user plane function (UPF) entity.

9. The method of claim 8, wherein the first PCC rule information and the second PCC rule information are generated by the PCF entity, based on a request message associated with a traffic characteristic in the target service flow received by the PCF entity.

10. The method of claim 9, wherein the request message comprises a quality of service (QoS) requirement for the first traffic characteristic and a QoS requirement for the second traffic characteristic,
the first PCC rule information is generated based on the QoS requirement for the first traffic characteristic, and
the second PCC rule information is generated based on the QoS requirement for the second traffic characteristic.

11. The method of claim 9, wherein the request message comprises information about traffic characteristic detection indicating that traffic characteristic information is included in a real-time transport protocol (RTP) header extension (HE) in the target service flow.

12. The method of claim 11, wherein the UPF entity detects, based on the information about traffic characteristic detection, a traffic characteristic of a packet in the RTP HE in the target service flow.

13. The method of claim 8, wherein a rule associated with the second traffic characteristic comprises information indicating reflective QoS indication (RQI) marking of the UPF entity.

14. A policy control function (PCF) entity in a wireless communication system, the PCF entity comprising:
a transceiver; and
at least one processor connected to the transceiver,
wherein the at least one processor is configured to:
receive a request message associated with a traffic characteristic in a target service flow;
based on the request message, generate first policy and charging control (PCC) rule information for a first traffic characteristic in the target service flow and second PCC rule information for a second traffic characteristic in the target service flow; and
transmit the first PCC rule information and the second PCC rule information to a session management function (SMF) entity.

15. A session management function (SMF) entity in a wireless communication system, the SMF entity comprising:
a transceiver; and
at least one processor connected to the transceiver,
wherein the at least one processor is configured to:
receive, from a policy control function (PCF) entity, first policy and charging control (PCC) rule information for a first traffic characteristic in a target service flow and second PCC rule information for a second traffic characteristic in the target service flow;
generate, based on the first PCC rule information and the second PCC rule information, first N4 rule information for the first traffic characteristic and second N4 rule information for the second traffic characteristic; and transmit the first N4 rule information and the second N4 rule information to a user plane function (UPF) entity.
